# EUROPEAN PATENT APPLICATION

(11) **EP 1 750 454 A1**
(43) Date of publication of application: **07.02.2007**
(21) Application number: 05291682.2
(22) Date of filing: 05.08.2005
(51) Int. Cl.: H04N 7/66, H04N 5/00

(54) **Method, device and program for receiving and verifying payload data of a transport stream**

(71) Applicant: Dibcom, 91120 Palaiseau (FR)
(72) Inventor: De Marchi, Stéphane, 75015 Paris (FR); Fallon, Henri, 75006 Paris (FR)
(74) Representative: Loisel, Bertrand

(57) **Abstract**

Reception, receiver and program for receiving data sections (S1...S4) spread on data packets (P1...P4) for example in a DVB-T or DVB-H transport stream (TS) comprising MPEG 2 payload sections. Within a demodulator module, a receiver interface (IC) calculates section CRCs incrementally, tests the CRC at the end of each section, and replaces each CRC by an integrity flag. Advantageously, the interface (IC) forms a new packet for further transmission to a processor (PRO) situated within a digital television receiver or the like every time the end of a section (S1...S4) or the end of a TS packet (P1...P4) is detected so that the new packets comprise data from only one data section and have a variable size at the maximum equal to the size of a TS packet (P1...P4). When an entire TS packet is received before the end of a data section, a partial CRC is kept in the interface memory and the TS packet is deleted from the interface buffer (10). Hence, the size of the interface buffer (10) can be made as small as one reception packet and the processor (PRO) does not need to calculate the CRC.

## Description

The present invention concerns the processing at the reception of a data stream comprising data sections spread on data packets, an error correction code being associated and transmitted with every section.

Generally, data streams come in sections themselves spread on data packets. This is the case for example in the normalized data formats called MPEG, DVB-T and DVB-H in which a stream of service data called program specific information (PSI) and system information (SI), is spread on data packets called elementary transport stream.

Every section carries an error correction code such as, for example, a cyclical redundancy code or checksum designated CRC, to verify the integrity of the transmission. This error correction code is computed by the emitter and is transmitted together with the data sections. Upon reception, a new error correction code is computed from the received data section and compared to the one received together with the data stream. Alternatively, the section carries a complementary code computed by the emitter so that the CRC of the whole section, including the complementary code, is equal to zero. Thus, upon reception the CRC of the received section is computed and compared to zero to determine if the section is intact.

The data stream is received by a tuner and then, transmitted to a processing module, or host processor, through an interface module or interface chip IC which is generally part of the demodulator.

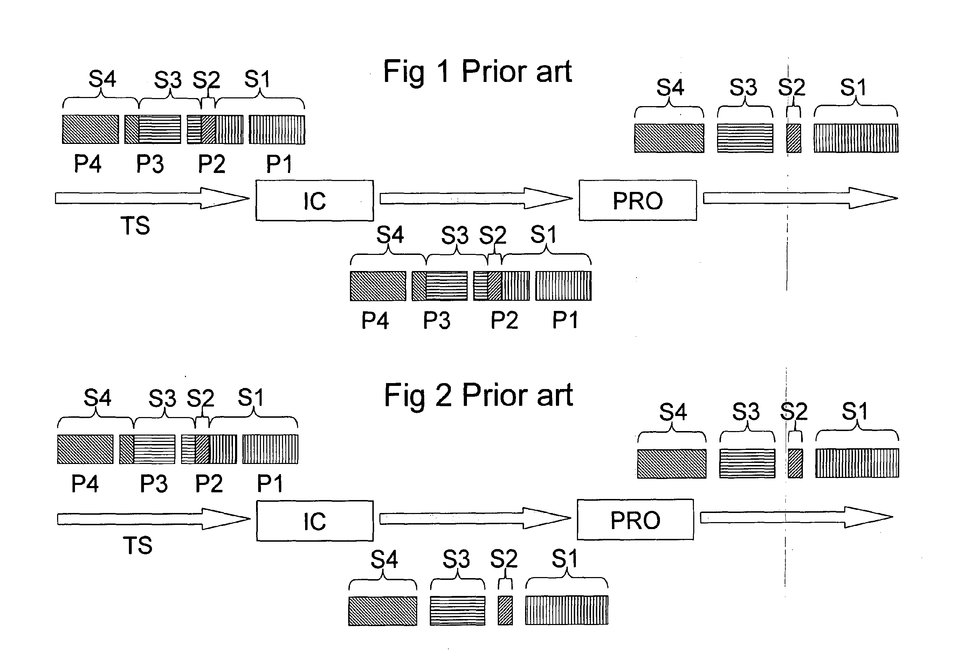

In a first embodiment of the prior art represented on figure 1, the transport stream TS comprises four sections referenced as S1, S2, S3 and S4 spread over four packets referenced as P1, P2, P3 and P4, this transport stream is received from the tuner by the interface chip IC which transmits directly the data packets as received to the processor PRO. Accordingly the exact same stream of data is transmitted from the interface chip to the processor which reassembles the sections and computes the CRCs to deliver each of the sections S1, S2, S3 and S4 with a verified CRC.

This embodiment consumes processor computation time as the entire computation is achieved by this element.

In a second embodiment of the prior art represented on figure 2, the same transport stream comprising fours sections spread over four packets is received by the interface chip IC. In this embodiment, the IC achieves all the computations and delivers directly the sections reassembled with a verified CRC for transmission to the processor.

In this embodiment, the interface chip requires more memory, components and power in order to bufferize the received data packets to reassemble the data sections and to compute the CRCs.

Accordingly, both existing embodiments require expensive and power consuming components which are not appropriate especially in handled devices.

The aim of the present invention is to solve this problem by providing an efficient method and a corresponding device for receiving a data stream comprising data sections spread on data packets, that does not required too much memory and reduces power consummation.

To this effect, the invention relates to a method for receiving a data stream as recited in claim 1 and a corresponding device as recited in claim 8. The invention also relates to a program as recited in claim 13.

Thanks to the incrementally computing of the error correction code in this interface module, the invention achieves reception of a data stream efficiently, by use of reduced size memories and by allowing a repartition of the computation between the interface module and the processing module.

Other features and advantages of the invention will be apparent from the following description illustrated by the drawings in which:
- Figures 1 and 2, which were already mentioned before, represent the reception of a transport stream according to two embodiments of the prior art;
- Figures 3A and 3B, represent respectively the reception of a transport stream by a device according to the invention and a detailed representation of this device; and
- Figure 4 is a flow chart of the method according to the invention.

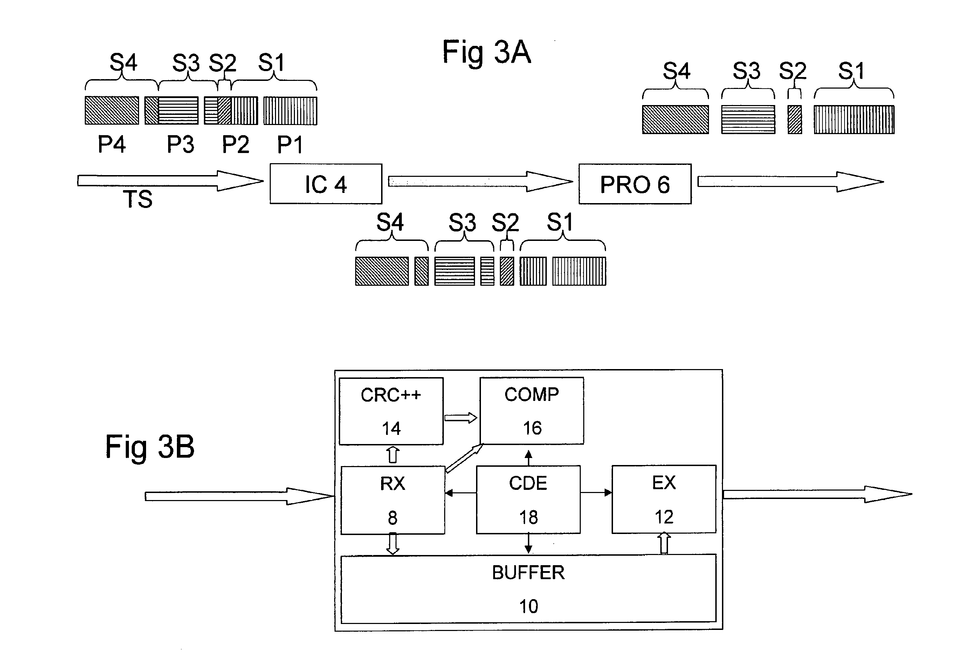

In the figure 3A, the reception of a data stream according to the invention is represented. This data stream corresponds to a DVB-H or DVB-T stream containing -for example MPEG data, and is referenced as a transport stream, TS.

The represented fragment of TS comprises four sections referenced as sections S1, S2, S3 and S4 spread over four data packets referenced as P1, P2, P3 and P4. Every data sections S1 to S4 comprises an error correction code corresponding to a CRC checksum and respectively referenced CRC1 to CRC4.

This data stream TS is received by the device 2 according to the invention. More precisely, this data stream is received by an interface module or interface chip (IC) referenced 4 and part of a demodulator. The data stream is then transmitted to a processing module or processor (PRO) referenced 6.

The interface module 4 is adapted to incrementally compute an error correction code for the current data section along its reception as will be described in more details further on.

In the embodiment described, data sections are transmitted by the interface module 4 to the processing module 6 with a verified CRC. More precisely, in each section the received CRC is replaced by a flag indicating if the section is intact or not, this flag being obtained by a verification of the incrementally computed CRC.

Accordingly, part of the computation of the CRC is achieved in the interface module 4 and part of it in the processing module 6. This allows the use of small size memories, requires little computation time from the processor and allows consumption reduction.

In the embodiment described, the interface module 4 is further adapted to repacketize the data packet received before transmission to the processing module 6.

Thus, the interface module 4 transmits to the processing module 6 segments of data packets comprising data from only one section and which maximum size corresponds to the size of a data packet.

Accordingly, the CRC verification is achieved efficiently with very little or no extra components and without slowing down the processing module 6. Furthermore, the repacketization of the data allows a faster processing by the processing module and also a better power supply management.

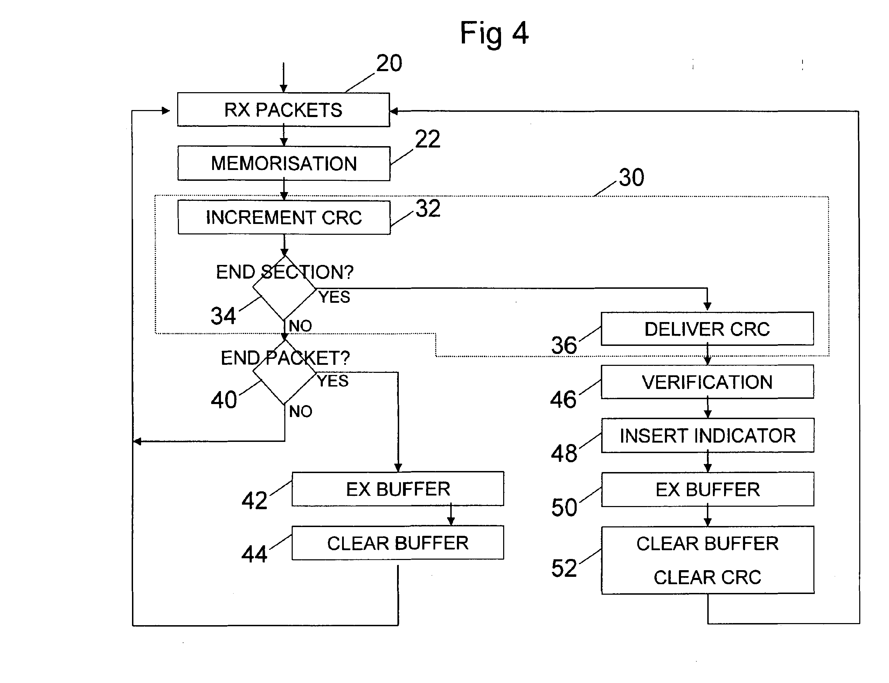

With reference to figures 3A, 3B and 4, the detail of the functioning of the device 2 will now be described.

As represented on figure 3B, the interface module 4 comprises a receiving element referenced 8, connected to a buffer memory 10 which size corresponds, in the described embodiment, to the size of one data packet. The buffer 10 is also connected to an emitting element 12, adapted to transmit data to the processor module 6.

The interface module 4 also comprises a CRC computation element 14, a CRC verification element 16 and a command element 18 which commands all the elements of the interface module 4.

This device 2 is adapted to achieve first a step 20 represented in figure 4 of reception of data packet P1, this data packet is received by the receiving element 8 and transmitted to the buffer 10 for a step 22 of memorisation.

Upon reception of the data packet P1 by the interface module 4, the data are also transmitted to the CRC computation element 14 for a step 30 of incrementally computing an error correction code for the current data section S1.

Step 30 first comprises a substep 32 of computation of a partial CRC code with the available data achieved by the CRC computation element 14.

Substep 32 is followed by a test 34 to determine if data received is the last set of data of the section.

In case that test 34 is positive which means that the entire section has been received, then the method comprises a substep 36 of delivering of an incrementally computed error correction code for the received data section, this code being the partial CRC as computed after receiving the last set of data from the current section.

At that stage, the end of the section has not been received yet and accordingly test 34 is negative and followed by a test 40 of detection of the end of the data packet, to determine if the received set of data is or not the last set of data of the data packet.

Tests 34 and 40 are achieved by detection of predetermined sequence of data forming headers or footers of the data sections or data packets respectively.

At that stage, test 40 is negative as the entire packet P1 has not been received yet. Accordingly, the method continues by going back to step 20 to received the following set of data from data packet P1.

The same stages will repeat until the reception of the final set of data of data packet P1. At each loop, step 22 allows the memorisation of the received set of data in buffer 10 and step 32 achieves the incremental computation of the CRC for the current section.

When test 40 is positive, which means that the entire data packet has been received, it is followed by a step 42 of emission of the content of the buffer memory 10.

At that stage, the entire packet P1 has been received and is transmitted from the interface module 4 to the processor module 6. The buffer memory 10 is deleted after emission in a step 44. However, the incrementally computed CRC is kept in memory.

The method continues by going back to step 20 in order to receive the first set of data from data packet P2 and to memorise it. The substep 32 is achieved and the partial CRC is incrementally computed with first set of data packet P2 which still contains data from data section S1.

When the end of the section S1 is detected at test 34, then the method continues by substep 36 in which the incrementally computed CRC is delivered.

In that case, step 30 of computation of the CRC is followed by a step 46 of verification of the incrementally computed error correction code. This achieved by comparison with the received error correction code CRC1.

This verification achieved by the verification element 16 fed with the incrementally computed CRC delivered by the CRC computation element 14 and with the received CRC of the current section delivered by the receiving element 8.

In the example, this verification 46 delivers a validity indicator in order to indicate if the data section S1 is intact if both CRC are-equal or not otherwise.

In step 48, the set of data corresponding to the received error correction code CRC1 memorised in the buffer 10 is replaced by this indicator or flag under control of the command element 18.

Furthermore, the method comprises a step 50 of emission of the content of the buffer memory 12 to transmit to the processor module 6 the segment of the data packet P2 comprising the data from the data section S1. In this transmitted segment, the received error correction code has been replaced by the validity indicator.

Upon reception of a data section with an invalid indicator, the processing module 6 can either try to correct the data section or discard it.

Step 50 is followed by a step 52 in which the buffer memory 10 and the incrementally computed CRC are erased.

The method continues by going back to step 20 in order to receive the following set of data. In that case, packet P2 has not yet been received entirely method continues by processing another set of data packet P2 which is part of data section S2.

Data section S2 is entirely comprised in data packet P2, and accordingly, data section S2 is transmitted when its last set of data is received and test 34 is positive. As described above, prior to transmission, the received CRC is replaced by a validity indicator resulting from the comparison achieved in step 46.

Then, as represented in figure 3A, the remaining data from data packet P2 is transmitted to the processing module 6 when the end of packet P2 is detected. A segment of data packet P3 is transmitted together with a CRC indicator when the end of data section S3 is detected, the remaining data from data packet P3 is transmitted when the end of data packet P3 is detected. The remaining data from data section S4 is transmitted with the corresponding validity indicator when the end of the section S4 is detected.

In the embodiment described, the transmission is triggered every time the end of a section or the end of a packet is detected, accordingly, the transmitted segments of data packets comprise data from only one data section and their size is at maximum equal to the size of one data packet.

Of course, many other embodiments are possible.

Depending on the embodiments, the error correction codes transmitted in the data stream can be CRC computed over the sections or complementary codes set in order that the CRC of one entire section, including the error correction code is equal to a determined value, such as zero.

In that case, the verification of the incrementally computed CRC is a comparison with this predetermined value.

In another embodiment, it is also possible for the interface module to send to the processing module the incrementally computed error correction code and the entire data section comprising the received error correction code so that the processing module achieves the comparison between these two error correction codes. Advantageously, if the transmitted error correction code is a complementary code, only the incrementally computed error correction code is transmitted and compared by the processing module to zero.

In another embodiment, the buffer memory of the interface module is larger than the size of one data packet and accordingly transmission is triggered only when the end of one data section is detected.

The method of the invention can also be achieved by a computer program comprising instructions which, when executed by a processor, causes the processor to receive the data packets of the data stream and upon reception, incrementally compute an error correction code for the current data section before transmitting the data stream packet by packet to a processing module.

Such a processor program can be adapted to achieve any of the embodiments described above and can be adapted in any kind of electronic articles such as digital television receivers, computers, laptops, handled devices or the like and the internal components thereof.

## Claims

1. Method for receiving a data stream (TS) comprising data sections (S1, S2, S3, S4) spread on data packets (P1, P2, P3, P4), an error correction code (CRC) being associated and transmitted with every section, the method comprising the steps of:
- receiving (20, 22) the packets of said data stream by an interface module (4); and
- transmitting (42, 50) said data stream, packet by packet, from said interface module to a processing module (6),
**characterized in that** it also comprises:
- upon reception of data by said interface module, incrementally computing (32) an error correction code for the current data section; and
- when the entire section has been received, verifying (36) the incrementally computed error correction code to deliver a section validity indicator.

2. Method according to claim 1, wherein said step of verifying (36) comprises comparing the incrementally computed error correction code with a predetermined value.

3. Method according to claim 1, wherein the step of verifying (36) comprises comparing the incrementally computed error correction code with the received error correction code.

4. Method according to any of claims 1 to 3, wherein when the entire section has been received, the incrementally computed error correction codes is transmitted by said interface module to said processing module wich achieves said verification.

5. Method according to any of claims 1 to 3, wherein said verification is achieved by said interface module, the method further comprising replacing (48) the received error correction code from the data section by said validity indicator before transmission to said processing module.

6. Method according to any of claims 1 to 5, wherein it further comprises repacketizing the data packets received by said interface module before transmission to said processing module.

7. Method according to claim 6, wherein repacketizing comprises segmenting data packets comprising data from different sections to transmit (42, 50) segments of data packets comprising data from only one data section.

8. Device (2) for receiving a data stream (TS) comprising data sections (S1, S2, S3, S4) spread on data packets (P1, P2, P3, P4), an error correction code (CRC) being associated and transmitted with every section, the method comprising :
- an interface module (4) adapted for receiving the packets of said data stream and transmitting them packets by packets; and
- a processing module (6) adapted for processing said packets transmitted by said interface module,
**characterized in that**
- said interface module being adapted for incrementally computing an error correction code for the current data section upon reception of data; and
- the device further being adapted for verifying the incrementally computed error correction code and to deliver a section validity indicator.

9. Device according to claim 8, wherein the interface module is adapted to transmit to the processing module the incrementally computed error correction codes and wherein the processing module (6) is adapted to achieve said verification.

10. Device according to claim 8, wherein said interface module (4) is adapted to achieve said verification and to replace the received error correction code from the data section by said validity indicator.

11. Device according to any of claims 8 to 10, wherein said interface module (4) is also further adapted to repacketize the data packet received before transmitting them to said processing module (6).

12. Device according to claim 11, wherein said interface module (4) is adapted to repacketize the data packets by segmenting the data packets comprising data from different sections to deliver segments of data packets comprising data from only one data section.

13. Program for execution by a processor comprising instructions which, when executed by said processor, causes the processor to perform the followings:
- receive a data stream (TS) comprising data sections (S1, S2, S3, S4) spread on data packets (P1, P2, P3, P4) an error correction code (CRC) being associated and transmitted with every section;
- upon reception of data, incrementally compute an error correction code (CRC) for the current data section; and
- transmitting the data stream packet by packet to a processing module.

14. Program according to claim 13, further comprising instructions which, when executed by the processor, causes the processor to verify the incrementally computed error correction code and to deliver a section validity indicator.
